# EUROPEAN PATENT APPLICATION

(11) **EP 3 872 766 A2**
(43) Date of publication of application: **01.09.2021**
(21) Application number: 21164441.4
(22) Date of filing: 24.03.2021
(51) Int. Cl.: G06T 11/60

(54) **METHOD AND DEVICE FOR PROCESSING IMAGE, RELATED ELECTRONIC DEVICE AND STORAGE MEDIUM**

(30) Priority: 12.06.2020 CN 202010537221
(71) Applicant: BEIJING BAIDU NETCOM SCIENCE AND TECHNOLOGY CO. LTD., 100085 Beijing (CN)
(72) Inventor: SUN, Hao, Beijing, 100085 (CN); LI, Fu, Beijing, 100085 (CN); LI, Xin, Beijing, 100085 (CN); LIN, Tianwei, Beijing, 100085 (CN)
(74) Representative: Maiwald Patent- und Rechtsanwaltsgesellschaft mbH

(57) **Abstract**

The disclosure provides a method for processing an image, an electronic device, and a storage medium, belonging to a field of computer vision and deep learning. An image including a face figure is acquired (110). Facial feature information matching the face figure is extracted (120). A style of the image is converted (130) to a preset drawing style based on the facial feature information to obtain a style transferred image.

## Description

### TECHNICAL FIELD

Embodiments of the disclosure relate to image processing technologies, particularly to a field of artificial intelligence, and to a method for processing an image, a device for processing an image, an electronic device, and a storage medium.

### BACKGROUND

With the development of image processing technologies, users are no longer satisfied with the originally captured images. Personalization needs are increasing, and thus users pursue filters of different styles.

Filters of some drawing styles, such as filters of Oil Painting Style and filters of Ink Painting Style, have unique styles and vivid effects. Adding the filter of a certain drawing style to an image is generally achieved by stylized transferring of the image, preserving the content of the image while incorporating the drawing style. In the process of implementing the stylized transferring of the image, the inventor found that in the prior art, the facial features of the portrait may be deformed, the integration effect of the drawing style is poor, and the user experience is poor when applying a filter of a certain drawing style to a portrait image.

### SUMMARY

Embodiments of the disclosure provide a method for processing an image, a device for processing an image, an electronic device, and a storage medium, which may ensure the integrity, the consistency, and the aesthetics of the face image during the image conversion process.

In a first aspect, embodiments of the disclosure provide a method for processing an image. The method includes: acquiring an image to be processed, the image to be processed containing a face figure; extracting facial feature information matching the face figure; and obtaining a style transferred image matching the image to be processed by converting a style of the image to be processed to a preset drawing style based on the facial feature information.

In a second aspect, embodiments of the disclosure provide a device for processing an image. The device includes: a first image acquiring module, configured to acquire an image to be processed, the image to be processed containing a face figure; an information extracting module, configured to extract facial feature information matching the face figure; and a second image acquiring module, configured to obtain a style transferred image matching the image to be processed by converting a style of the image to be processed into a preset drawing style based on the facial feature information.

In a third aspect, embodiments of the disclosure provide an electronic device. The electronic device includes at least one processor, and a memory communicatively coupled with the at least one processor. The memory is configured to store instructions executable by the at least one processor. When the instructions are executed by the at least one processor, the at least one processor is configured to execute a method for processing an image according to any one of embodiments of the disclosure.

In a fourth aspect, embodiments of the disclosure provide a non-transitory computer-readable storage medium, having computer instructions stored thereon. The computer instructions are configured to cause a computer to execute a method for processing an image according to any one of embodiments of the disclosure.

With the technical solution according to embodiments of the disclosure, by extracting the facial feature information of the image to be processed, the style of the image to be processed is converted to the preset drawing style based on the facial feature information to obtain the style transferred image. This technical solution solves a problem existing in the prior art that the face figure may be deformed, the effect of integrating the preset drawing style into the image is poor, and the user experience is poor when the style of the image including the face figure is converted to the preset drawing style. The technical solution may improve the integrity, the consistency, and the aesthetics of the face image during the image conversion process, thereby improving the user experience.

It should be understood, this part is not intended to identify key or important features of embodiments of the disclosure, nor to limit the scope of the disclosure. Other features of the disclosure will be easily understood by the following description.

### BRIEF DESCRIPTION OF THE DRAWINGS

The accompanying drawings are used to better understand the technical solution and do not constitute a limitation to the disclosure.
FIG. 1a is a flowchart illustrating a method for processing an image according to embodiments of the disclosure.
FIG. 1b is schematic diagram illustrating effect of extracting facial feature information according to some embodiments of the disclosure.
FIG. 1c is a schematic diagram illustrating effect of converting a style of an image to be processed to a preset drawing style according to some embodiments of the disclosure.
FIG. Id is a schematic diagram illustrating a real portrait image according to some embodiments of the disclosure.
FIG. 1e is a schematic diagram illustrating a styled portrait image according to some embodiments of the disclosure.
FIG. 2a is a flowchart illustrating a method for processing an image according to some embodiments of the disclosure.
FIG. 2b is a schematic diagram illustrating effect of pre-processing the real portrait image according to some embodiments of the disclosure.
FIG. 2c is a block diagram illustrating a training process of a style transfer model according to some embodiments of the disclosure.
FIG. 3 is a block diagram illustrating a device for processing an image according to some embodiments of the disclosure.
FIG. 4 is a block diagram illustrating an electronic device according to some embodiments of the disclosure.

### DETAILED DESCRIPTION

The following describes exemplary embodiments of the disclosure in combination with accompanying drawings, including various details of the embodiments of the disclosure to facilitate understanding, which should be regarded as merely exemplary. Therefore, those of ordinary skill in the art should realize that various changes and modifications can be made to the embodiments described herein. Likewise, for clarity and conciseness, descriptions of well-known functions and structures are omitted in the following description.

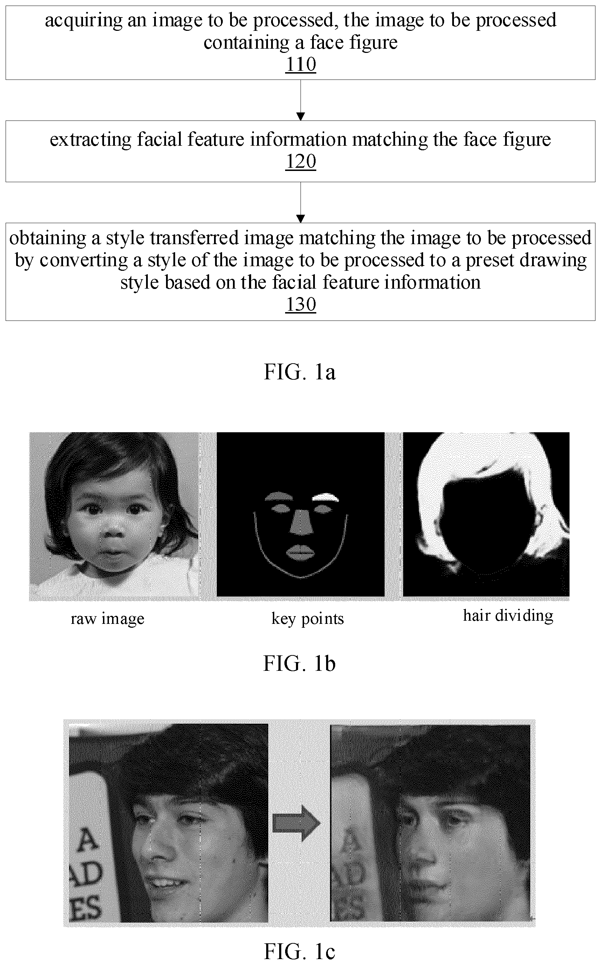

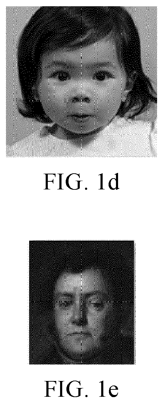

FIG. 1a is a flowchart illustrating a method for processing an image according to some embodiments of the disclosure. The technical solution according to embodiment of the disclosure can be applied for a situation where a style of an image containing a human face is converted to a preset drawing style. The method can be executed by a device for processing an image. The device may be implemented by software and/or hardware and generally integrated in an electronic device. In some examples, the device can be integrated in a mobile terminal, such as a mobile phone or a tablet.

As illustrated in FIG. 1a, the technical solution according to embodiment of the disclosure may include the following.

At block 110, an image to be processed is acquired. The image to be processed includes a face figure.

The image to be processed includes a human face figure and needs to be converted into a preset drawing style. For example, the image to be processed may be a user's self-portrait image.

In some embodiments of the disclosure, the object of the conversion into the preset drawing style is the image to be processed including the human face figure.

At block 120, facial feature information matching the face figure is extracted.

The facial feature information may include not only facial key points included in the image to be processed, such as facial features, face contour, and hairstyle contour, but also individual features of the face figure, such as nevus, glasses, and earrings. The facial feature information matches the face figure contained in the image to be processed.

In some examples, the facial feature information may include at least one of facial feature positions, facial feature sizes, face contour, and hairstyle contour.

The facial feature positions refer to positions of the facial features of the human face on the image to be processed. The facial feature sizes refer to areas occupied by the facial features on the human face. The face contour refers to the contour line of the human face of the portrait. The hairstyle contour refers to a region defined by the hairstyle of the portrait. FIG. 1b is a schematic diagram illustrating effect of extracting the facial feature information. As illustrated in FIG. 1b, the facial feature positions, the facial feature sizes, and the face contour are extracted from a raw image to generate the facial key points, and the hairstyle region defined by the hairstyle is extracted. The facial key points and the hairstyle region together form the facial feature information.

In some examples, before converting the style of the image to be processed, the method may include extracting the facial feature information of the image to be processed. By extracting the facial feature information in advance, the integrity of the face figure may be kept after the image conversion, thereby improving the beauty of the face figure, and improving the user experience.

At block 130, the style of the image to be processed is converted into the preset drawing style based on the facial feature information to obtain a style transferred image matching the image to be processed.

The preset drawing style may be selected by the user to convert the style of the image to be processed. For example, the preset drawing style may include Oil Painting Style, Chinese Ink Painting Style, Traditional Chinese Realistic Painting Style. The preset drawing style may also include different schools of the same drawing style. For example, the preset drawing style may include different schools of the Oil Painting Style, such as Realism Oil Painting Style, Abstractionism Oil Painting Style, Impressionism Oil Painting Style, etc. The preset drawing style is not limited in the disclosure.

The style transferred image refers to an image formed by incorporating the preset drawing style into the image to be processed on the premise of preserving the content of the image to be processed. FIG. 1c is a schematic diagram illustrating effect of converting a style an image to be processed into a preset drawing style. As illustrated in FIG. 1c, the image to be processed contains a face figure. After the style of the image to be processed is converted to the Oil Painting Style, the style transferred image obtained not only keeps the facial features of the image to be processed, but also has the Oil Painting Style.

Converting the style of the image to be processed to the preset drawing style based on the facial feature information may include inputting the facial feature information and the image to be processed into a style transfer model which is trained, or reducing a difference between the image to be processed and the image of the preset drawing style by keeping the facial feature information. The method and implementation process of obtaining the style transferred image is not limited in the disclosure.

In some examples, obtaining the style transferred image matching the image to be processed by converting the style of the image to be processed to the preset drawing style based on the facial feature information may include obtaining a style transfer model matching the preset drawing style, and inputting the image to be processed and the facial feature information into the style transfer model to obtain the style transferred image. The style transfer model is obtained by training a cyclic generative adversarial network in advance using a real portrait image set, facial feature information matching each real portrait image contained in the real portrait image set, a styled portrait image set, and facial feature information matching each styled portrait image contained in the styled portrait image set. The styled portrait image set matches the preset drawing style.

The style transfer model is a model used to convert the image to be processed into the style transferred image having the preset drawing style. The style transfer model is obtained by training the cyclic generative adversarial network based on the real portrait image set, the facial feature information matching each real portrait image contained in the real portrait image set, the styled portrait image set, and the facial feature information matching each styled portrait image contained in the styled portrait image set. The real portrait image set is a collection of multiple real portrait images. FIG. Id is a schematic diagram illustrating a real portrait image. As illustrated in FIG. Id, the real portrait image contains a real face figure. The styled portrait image set is a collection of multiple styled portrait images. FIG. 1e is a schematic diagram illustrating a styled portrait image. As illustrated in FIG. 1e, the styled portrait image is an image of the preset drawing style that contains a face figure. The cyclic generative adversarial network is configured to convert a type of images into another type of images.

In some examples, the facial feature information of the image to be processed is extracted, and the facial feature information is input to the style transfer model as priori information, such that the input image to be processed can be processed by the style transfer model. While changing the style, the facial features are fixed to ensure the integrity and consistency of the facial features and enhance aesthetics of the style conversion.

With the technical solution according to embodiments of the disclosure, by extracting the facial feature information of the image to be processed, the style of the image to be processed is converted to the preset drawing style based on the facial feature information to obtain the style transferred image. This technical solution solves a problem existing in the prior art that the face figure may be deformed, the effect of integrating the preset drawing style into the image is poor, and the user experience is poor when the style of the image including the face figure is converted to the preset drawing style. The technical solution may improve the integrity, the consistency, and the aesthetics of the face image during the image conversion process, thereby improving the user experience.

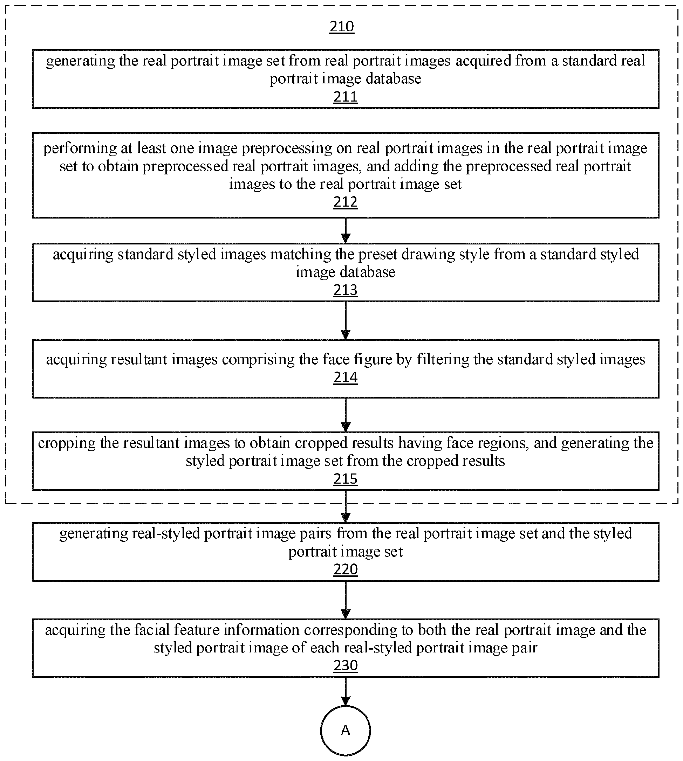

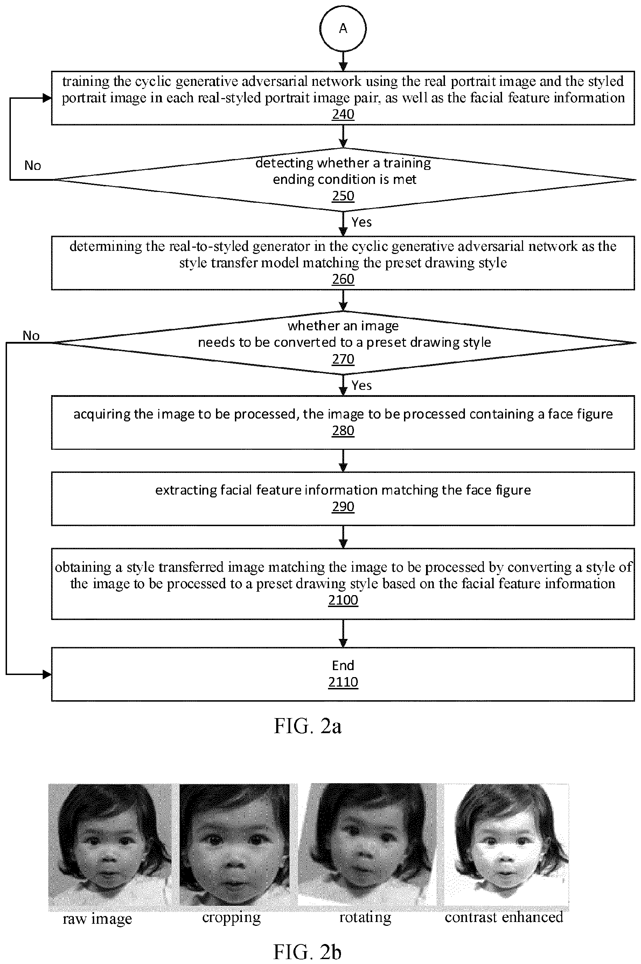

FIG. 2a is a flowchart illustrating a method for processing an image according to some embodiments of the disclosure. Based on the above embodiments, embodiments illustrated in FIG. 2a further describe the process of training the style transfer model.

Correspondingly, as illustrated in FIG. 2a, the technical solution according to embodiments of the disclosure may include the following.

At block 210, a real portrait image set is acquired and a styled portrait image set matching the preset drawing style is acquired.

The block 210 may further include the following.

At block 211, multiple real portrait images are acquired from the standard real portrait image database to form the real portrait image set.

The standard real portrait image database refers to a database containing standard real portrait images. For example, the standard real portrait image database can be a FFHQ (Flickr-Faces-HQ, high-definition facial data set) data set. The FFHQ data set may include more than 70,000 high-definition facial images. The real portrait image set may include the real portrait images selected from the standard real portrait image database. Neither tyle of the standard real portrait image database nor the number of selected real portrait images is limited in the disclosure.

At block 212, at least one image preprocessing is performed on each real portrait image contained in the real portrait image set to obtain preprocessed real portrait images, and the preprocessed real portrait images are added to the real portrait image set.

The image preprocessing is a processing operation of the real portrait images. The image preprocessing may include cropping, rotating, skin smoothing, brightness adjusting, and contrast adjusting. FIG. 2b is a schematic diagram illustrating effect of performing the image preprocessing on a real portrait image. As illustrated in FIG. 2b, the real portrait image may be cropped, rotated, and contrast enhanced. The obtained images are added to the real portrait image set.

Performing the image preprocessing on the real portrait images is to preprocess the standard real portrait images, which can simulate actual shooting effects, enhance the diversity of the real portrait images, and improve the robustness of the style transfer model.

At block 213, a standard styled image matching the preset drawing style is acquired from a standard styled image database.

The standard styled image database refers to a database that stores images of different drawing styles. For example, when the drawing style is the Oil Painting style, the standard styled image database can be a wikiart database or a painter-by-numbers database. The standard styled image is an image matching the drawing style.

At block 214, resultant images including the face figure are obtained by filtering the standard styled images.

The resultant images are selected from multiple standard style images. The resultant image is a standard style image including a human face. The standard styled image including the face figure may be obtained by filtering the standard styled images through a face detection model, or a preset image recognition algorithm. The method and the implementation process of obtaining the standard styled image including the face figure are not limited in embodiments of the disclosure.

At block 215, the resultant images are cropped to obtain cut results having a face region and the styled portrait image set is generated from the cut results.

Face region cropping may be performed on the resultant images to obtain the cut results, and the styled portrait image set may be generated based on the cut results. Performing the face region cropping is to facilitate the extraction of facial feature information.

In some examples, the number of real portrait images contained in the real portrait image set may be the same with or different from the number of styled portrait images contained in the styled portrait image set.

At block 220, real-styled portrait image pairs are generated based on the real portrait image set and the styled portrait image set.

A real-styled portrait image pair is an image pair including a real portrait image and a styled portrait image. In some examples, the real portrait image set and the styled portrait image set are training sets of the cyclic generative adversarial network. The real portrait image and the styled portrait image do not need to match each other.

At block 230, the facial feature information corresponding to the real portrait image of each real-styled portrait image pair is acquired, and the facial feature information corresponding to the styled portrait image of each real-styled portrait image pair is acquired.

At block 240, the cyclic generative adversarial network is trained using the real portrait image and the styled portrait image of each real-styled portrait image pair, the facial feature information of the real portrait image and the facial feature information of the styled portrait image.

The cyclic generative adversarial network includes: real-to-styled generator for transferring a real portrait to a styled portrait, a styled-to-real generator for transferring a styled portrait to a real portrait, a real portrait discriminator, and a styled portrait discriminator.

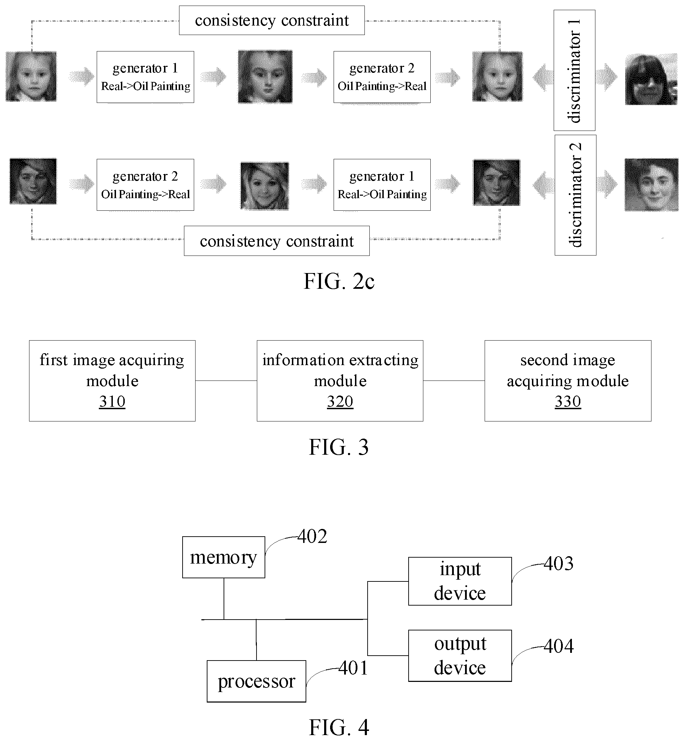

FIG. 2c is a schematic diagram illustrating a training process of a style transfer model. As illustrated in FIG. 2c, the cyclic generative adversarial network includes two generators and two discriminators. The real-to-styled generator may be configured to convert a real portrait image into a styled conversion image. The styled-to-real generator may be configured to convert the styled conversion image into a simulated real portrait image. The discriminator 1, i.e., the real portrait discriminator, is configured to determine whether the simulated real portrait image is a real real portrait image, and the style transfer model is also added with a consistency constraint on the real portrait image and the simulated real portrait image. The styled-to-real generator is also configured to convert the styled portrait image into a simulated real portrait image. The real-to-styled generator is also configured to convert the simulated real portrait image to a styled conversion image. The discriminator 2, i.e., the styled portrait discriminator, is configured to determine whether the styled conversion image is a real styled portrait image and the style transfer model is also added with a consistency constraint on the styled portrait image and the styled conversion image. Adding the two consistency constraints is to ensure the consistencies of the face figure respectively in the real portrait image and the styled conversion image.

At block 250, it is determined whether a training ending condition is met. In cases where the training ending condition is met, the block 260 is executed. In cases where the training ending condition is not met, the block 240 is executed.

Detecting that the training ending condition is met can be detecting an instruction for stopping the training and issued by the user, or detecting that the number of cycle training processes of the cyclic generative adversarial network equals to a preset number. The training ending condition is not limited in the disclosure.

At block 260, the real-to-styled generator of the cyclic generative adversarial network is used as the style transfer model matching the preset drawing style.

When the training is over, the real-to-styled generator of the current cyclic generative adversarial network may be used as the style transfer model to convert the style of the image to be processed to the preset drawing style.

At block 270, it is determined whether the style of the image to be processed needs to be converted to the preset drawing style. In cases where the style needs to be converted, the block 280 is executed. In cases where the style does not need to be converted, the block 2110 is executed.

At block 280, the image to be processed is obtained. The image to be processed includes a face figure.

At block 290, facial feature information matching the face figure is executed.

At block 2100, a style transfer model matching the preset drawing style is obtained. The image to be processed and facial feature information are input into the style transfer model to obtain a style transfer image.

At block 2110, the method ends.

With the technical solution according to embodiments, the style transfer model is obtained through the training using the real portrait image set, the styled portrait image set, the facial feature information of each real portrait image set contained in the real portrait image set, and the facial feature information of each styled portrait image contained in the styled portrait image set. The facial feature information of the image to be processed is extracted. The image to be processed and the facial feature information are input to the style transfer model to obtain the style transferred image. This technical solution solves a problem existing in the prior art that the face figure may be deformed, the effect of integrating the preset drawing style into the image is poor, and the user experience is poor when the style of the image including the face figure is converted to the preset drawing style. The technical solution may improve the integrity, the consistency and the aesthetics of the face image during the image conversion process, thereby improving the user experience.

FIG. 3 is a block diagram illustrating a device for processing an image according to some embodiments of the present disclosure. The device is generally integrated into an electronic device. For example, the device may be integrated into a mobile terminal, such as phone or tablet. The device may include a first image acquiring module 310, an information extracting module 320 and a second image acquiring module 330.

The first image acquiring module 310 is configured to acquire an image to be processed. The image to be processed includes a face figure.

The information extracting module 320 is configured to extract facial feature information matching the face figure.

The second image acquiring module 330 is configured to obtain a style transferred image matching the image to be processed by converting a style of the image to be processed into a preset drawing style based on the facial feature information.

With the technical solution according to embodiments of the disclosure, by extracting the facial feature information of the image to be processed, the style of the image to be processed is converted to the preset drawing style based on the facial feature information, to obtain the style transferred image. This technical solution solves a problem existing in the prior art that the face figure may be deformed, the effect of integrating the preset drawing style into the image is poor, and the user experience is poor when the style of the image including the face figure is converted to the preset drawing style. The technical solution may improve the integrity, the consistency, and the aesthetics of the face image during the image conversion process, thereby improving the user experience.

In some examples, the facial feature information includes at least one of facial feature positions, facial feature sizes, face contour, and hairstyle contour.

In some embodiments, the second image acquiring module includes a first image acquiring unit.

The first image acquiring unit is configured to obtain the style transferred image by acquiring a style transfer model matching the preset drawing style, and inputting the image to be processed and the facial feature information into the style transfer model.

The style transfer model is obtained by training a cyclic generative adversarial network in advance using a real portrait image set, facial feature information matching each real portrait image contained in the real portrait image set, a styled portrait image set, and facial feature information matching each styled portrait image in the styled portrait image set. The styled portrait image set matches the preset drawing style.

In some examples, the device further includes an image set acquiring module, an image pair generating module, an information acquiring module, a training module, and a model generating module.

The image set acquiring module is configured to acquire the real portrait image set and acquire the styled portrait image matching the preset drawing style.

The image pair generating module is configured to generate real-styled portrait image pairs based on the real portrait image set and the styled portrait image set.

The information acquiring module is configured to acquire the facial feature information corresponding to the real portrait image of each real-styled portrait image pair and the facial feature information corresponding to the styled portrait image of each real-styled portrait image pair.

The training module is configured to train the cyclic generative adversarial network using the real portrait image and the styled portrait image in each real-styled portrait image pair, as well as the facial feature information corresponding to the real portrait image and the facial feature information corresponding to the styled portrait image.

The cyclic generative adversarial network includes a real-to-styled generator for transferring a real portrait to a styled portrait, a styled-to-real generator for transferring a styled portrait to a real portrait, a real portrait discriminator and a styled portrait discriminator.

The model generating module is configured to determine the real-to-styled generator in the cyclic generative adversarial network as the style transfer model matching the preset drawing style, in response to detecting that a training ending condition is met.

In some embodiments, the image set acquiring module includes a first image set acquiring unit.

The first image set acquiring unit is configured to generate the real portrait image set from real portrait images acquired from a standard real portrait image database.

In some examples, the device further includes an image preprocessing module.

The image preprocessing module is configured to perform at least one image preprocessing on the real portrait images in the real portrait image set to obtain preprocessed real portrait images, and add the preprocessed real portrait images to the real portrait image set.

In some examples, the image set acquiring module further includes a second image acquiring unit, a third image acquiring unit and a second image set acquiring unit.

The second image acquiring unit is configured to acquire standard styled images matching the preset drawing style from a standard styled image database.

The third image acquiring unit is configured to acquire resultant images containing the face figure by filtering the standard styled images.

The second image set acquiring unit is configured to crop the resultant images to obtain cropped results having face regions, and generate the styled portrait image set from the cropped results.

The device for processing an image according to embodiments of the disclosure may be configured to execute the method for processing an image according to any of embodiments of the disclosure, and has the corresponding functional modules and beneficial effects of the method.

Embodiments of the disclosure further provide an electronic device and a computer-readable storage medium.

FIG. 4 is a block diagram illustrating an electronic device according to some embodiments of the disclosure. The electronic device aims to represent various forms of digital computers, such as a laptop computer, a desktop computer, a workstation, a personal digital assistant, a server, a blade server, a mainframe computer, and other suitable computers. The electronic device may also represent various forms of mobile devices, such as a personal digital processing, a cellular phone, a smart phone, a wearable device, and other similar computing devices. The components, connections and relationships of the components, and functions of the components illustrated herein are merely examples, and are not intended to limit the implementation of the disclosure described and/or claimed herein.

As illustrated in FIG. 4, the electronic device includes: one or more processors 401, a memory 402, and interfaces for connecting various components, including a high-speed interface and a low-speed interface. Various components are connected to each other with different buses, and may be mounted on a common main board or mounted in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if necessary. Similarly, multiple electronic devices may be connected, and each electronic device provides a part of necessary operations (for example, as a server array, a group of blade servers, or a multiprocessor system). In FIG. 4, one processor 401 is taken as an example.

The memory 402 is a non-transitory computer-readable storage medium according to embodiments of the disclosure. The memory is configured to store instructions executable by at least one processor, to cause the at least one processor to execute a method for processing an image according to embodiments of the disclosure. The non-transitory computer-readable storage medium according to embodiments of the disclosure is configured to store computer instructions. The computer instructions are configured to enable a computer to execute a method for processing an image according to embodiments of the disclosure.

As the non-transitory computer-readable storage medium, the memory 402 may be configured to store non-transitory software programs, non-transitory computer executable programs and modules, such as program instructions/modules (such as, a first image acquiring module 310, an information extracting module 320, and a second image acquiring module 330) corresponding to a method for processing an image according to embodiments of the disclosure. The processor 401 executes various functional applications and data processing of the server by operating non-transitory software programs, instructions and modules stored in the memory 402, that is, implements a method for processing an image according to embodiments of the disclosure.

The memory 402 may include a storage program region and a storage data region. The storage program region may store an application required by an operating system and at least one function. The storage data region may store data created by implementing the method for video frame interpolation through the electronic device. In addition, the memory 402 may include a high-speed random-access memory and may also include a non-transitory memory, such as at least one disk memory device, a flash memory device, or other non-transitory solid-state memory device. In some embodiments, the memory 402 may optionally include memories remotely located to the processor 401 which may be connected to the electronic device configured to implement a method for processing an image via a network. Examples of the above network include, but are not limited to, the Internet, an intranet, a local area network, a mobile communication network and combinations thereof.

The electronic device configured to implement a method for processing an image may also include: an input device 403 and an output device 404. The processor 401, the memory 402, the input device 403, and the output device 404 may be connected through a bus or in other means. In FIG. 4, the bus is taken as an example.

The input device 403 may be configured to receive inputted digitals or character information, and generate key signal input related to user setting and function control of the electronic device configured to implement a method for processing an image, such as a touch screen, a keypad, a mouse, a track pad, a touch pad, an indicator stick, one or more mouse buttons, a trackball, a joystick and other input device. The output device 404 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be a touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general-purpose programmable processor, may receive data and instructions from a storage system, at least one input device and at least one output device, and may transmit the data and the instructions to the storage system, the at least one input device and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including machine readable medium that receives machine instructions as machine readable signals. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components, or the front-end component. Components of the system may be connected to each other through digital data communication in any form or medium (such as, a communication network). Examples of the communication network include a local area network (LAN), a wide area networks (WAN), and the Internet.

The computer system may include a client and a server. The client and the server are generally remote from each other and usually interact via the communication network. A relationship between the client and the server is generated by computer programs operated on a corresponding computer and having a client-server relationship with each other.

It should be understood, steps may be reordered, added or deleted by utilizing flows in the various forms illustrated above. For example, the steps described in the disclosure may be executed in parallel, sequentially or in different orders, so long as desired results of the technical solution disclosed by the disclosure may be achieved without limitation herein.

## Claims

1. A method for processing an image, including:
acquiring (110; 280) an image, wherein the image comprises a face figure;
extracting (120; 290) facial feature information matching the face figure; and
obtaining (130; 2100) a style transferred image matching the image by converting a style of the image to a preset drawing style based on the facial feature information.

2. The method according to claim 1, wherein the facial feature information comprises at least one of facial feature positions, facial feature sizes, face contour, and hairstyle contour.

3. The method according to claim 2, wherein obtaining (120; 2100) the style transferred image comprises:
obtaining the style transferred image by acquiring a style transfer model matching the preset drawing style and inputting the image and the facial feature information into the style transfer model;
wherein the style transfer model is obtained by training a cyclic generative adversarial network in advance using a real portrait image set, facial feature information matching each real portrait image contained in the real portrait image set, a styled portrait image set, and facial feature information matching each styled portrait image in the styled portrait image set, and wherein the styled portrait image set matches the preset drawing style.

4. The method according to claim 3, further comprising:
acquiring (210) the real portrait image set and acquiring the styled portrait image set matching the preset drawing style;
generating (220) real-styled portrait image pairs from the real portrait image set and the styled portrait image set;
acquiring (230) the facial feature information corresponding to the real portrait image of each real-styled portrait image pair and facial feature information corresponding to the styled portrait image of each real-styled portrait image pair;
training (240) the cyclic generative adversarial network using the real portrait image and the styled portrait image in each real-styled portrait image pair, as well as the facial feature information corresponding to the real portrait image and the facial feature information corresponding to the styled portrait image; wherein the cyclic generative adversarial network comprises: a real-to-styled generator for transferring a real portrait to a styled portrait, a styled-to-real generator for transferring a styled portrait to a real portrait, a real portrait discriminator and a styled portrait discriminator; and
determining (260) the real-to-styled generator in the cyclic generative adversarial network as the style transfer model matching the preset drawing style, in response to detecting that a training ending condition is met.

5. The method according to claim 4, wherein acquiring (210) the real portrait image set comprises:
generating (211) the real portrait image set from real portrait images acquired from a standard real portrait image database.

6. The method according to claim 5, further comprising:
performing (212) at least one image preprocessing on real portrait images in the real portrait image set to obtain preprocessed real portrait images, and adding the preprocessed real portrait images to the real portrait image set.

7. The method according to claim 4, wherein acquiring (210) the styled portrait image set matching the preset drawing style comprises:
acquiring (213) standard styled images matching the preset drawing style from a standard styled image database;
acquiring (214) resultant images comprising the face figure by filtering the standard styled images; and
cropping (215) the resultant images to obtain cropped results having face regions, and generating the styled portrait image set from the cropped results.

8. A device for processing an image, comprising:
a first image acquiring module (310), configured to acquire an image, the image comprising a face figure;
an information extracting module (320), configured to extract facial feature information matching the face figure; and
a second image acquiring module (330), configured to obtain a style transferred image matching the image by converting a style of the image into a preset drawing style based on the facial feature information.

9. The device according to claim 8, wherein the facial feature information comprises at least one of facial feature positions, facial feature sizes, face contour, and hairstyle contour.

10. The device according to claim 9, wherein the second image acquiring module (330) comprises:
a first image acquiring unit, configured to obtain the style transferred image by acquiring a style transfer model matching the preset drawing style, and inputting the image and the facial feature information into the style transfer model;
wherein the style transfer model is obtained by training a cyclic generative adversarial network in advance using a real portrait image set, facial feature information matching each real portrait image contained in the real portrait image set, a styled portrait image set, and facial feature information matching each styled portrait image in the styled portrait image set, the styled portrait image set matching the preset drawing style.

11. The device according to claim 10, comprising:
an image set acquiring module, configured to acquire the real portrait image set and acquire the styled portrait image matching the preset drawing style;
an image pair generating module, configured to generate real-styled portrait image pairs based on the real portrait image set and the styled portrait image set;
an information acquiring module, configured to acquire the facial feature information corresponding to the real portrait image of each real-styled portrait image pair, and acquire the facial feature information corresponding to the styled portrait image of each real-styled portrait image pair;
a training module, configured to train the cyclic generative adversarial network using the real portrait image and the styled portrait image in each real-styled portrait image pair, as well as the facial feature information corresponding to the real portrait image and the facial feature information corresponding to the styled portrait image; the cyclic generative adversarial network comprising a real-to-styled generator for transferring a real portrait to a styled portrait, a styled-to-real generator for transferring a styled portrait to a real portrait, a real portrait discriminator and a styled portrait discriminator; and
a model generating module, configured to determine the real-to-styled generator in the cyclic generative adversarial network as the style transfer model matching the preset drawing style, in response to detecting that a training ending condition is met.

12. The device according to claim 11, wherein,
the image set acquiring module comprises: a first image set acquiring unit, configured to generate the real portrait image set from real portrait images acquired from a standard real portrait image database; or
the image set acquiring module comprises:
a second image acquiring unit, configured to acquire standard styled images matching the preset drawing style from a standard styled image database;
a third image acquiring unit, configured to acquire resultant images containing the face figure by filtering the standard styled images; and
a second image set acquiring unit, configured to crop the resultant images to obtain cropped results having face regions, and generate the styled portrait image set from the cropped results.

13. An electronic device, comprising:
at least one processor (401); and
a memory (402) communicatively coupled to the at least one processor (401);
wherein the memory (402) is configured to store instructions executable by the at least one processor (401), when the instructions are executed by the at least one processor (401), the at least one processor (401) is configured to execute a method for processing an image according to any one of claims 1 to 7.

14. A non-transitory computer-readable storage medium, having computer instructions stored thereon, wherein the computer instructions are configured to cause a computer to execute a method for processing an image according to any one of claims 1 to 7.

15. A computer program product, containing computer programs when executed on a processor, causing the processor to perform a method for processing an image according to any one of claims 1 to 7.
